(19) Europäisches Patentamt
European Patent Office
Office européen des brevets

(11) Veröffentlichungsnummer: **0 135 810**
**B1**

(12) # EUROPÄISCHE PATENTSCHRIFT

(45) Veröffentlichungstag der Patentschrift: **14.12.88**

(51) Int. Cl.⁴: **C 08 G 59/62,** C 08 G 59/42, C 08 G 59/50, C 09 D 5/44

(21) Anmeldenummer: **84110069.6**

(22) Anmeldetag: **23.08.84**

(54) **Wasserdispergierbare Bindemittel für kationische Elektrotauchlacke und Verfahren zu ihrer Herstellung.**

(30) Priorität: **03.09.83 DE 3331904**

(43) Veröffentlichungstag der Anmeldung: **03.04.85 Patentblatt 85/14**

(45) Bekanntmachung des Hinweises auf die Patenterteilung: **14.12.88 Patentblatt 88/50**

(84) Benannte Vertragsstaaten: **AT BE CH DE FR GB IT LI NL SE**

(56) Entgegenhaltungen:
**EP-A-0 059 895**
**DE-A-2 811 913**
**FR-A-2 164 719**
**US-A-2 947 717**
**US-A-3 000 848**
**US-A-4 302 373**

**Die Akte enthält technische Angaben, die nach dem Eingang der Anmeldung eingereicht wurden und die nicht in dieser Patentschrift enthalten sind.**

(73) Patentinhaber: **BASF Lacke + Farben Aktiengesellschaft, Max- Winkelmann- Strasse 80, D-4400 Münster (DE)**

(72) Erfinder: **Geist, Michael, Dr., Rubensstrasse 251, D-4400 Münster (DE)**
Erfinder: **Ott, Günther, Dr., von- Holte- Strasse 101 a, D-4400 Münster- Wolbeck (DE)**
Erfinder: **Schön, Georg, Dr., Schillerstrasse 2, D-4416 Everswinkel (DE)**

**EP 0 135 810 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung betrifft wasserdispergierbare Bindemittel für katonische Elektrotauchlacke, erhalten durch Umsetzung von

A) niedermolekularen, aromatische Gruppen enthaltenden Epoxidharzen mit einem Epoxidäquivalentgewicht unter 375 mit
B) aliphatischen und/oder alicylischen polyfunktionellen Alkoholen und/oder Carbonsäuren mit einem zahlenmittleren Molekulargewicht unter 350 zu einem epoxidgruppenhaltigen Zwischenprodukt, das einen Anteil an aromatischen Gruppen, berechnet als Phenylengruppe, von 10 bis 45 Gewichts-% enthält, und weitere Modifizierung des erhaltenen Zwischenprodukts mit
C) einer Verbindung mit mindestens 2 Hydroxylgruppen unter Addition an die Epoxidgruppen und weitere Umsetzung von A), B) und C) mit
D) primären und/oder sekundären Aminen oder Ammoniumsalzen zur Erzielung der erforderlichen Wasserdispergierbarkeit, dadurch gekennzeichnet, daß die Komponente C) ein elastifiziertes Polyphenol mit einem Molekulargewicht über 350 ist.

Kationische wasserdispergierbare Kunstharze als Bindemittel für Elektrotauchlacke sind bekannt. So beschreibt z. B. die DE-OS-2 701 002 ein derartiges Harz, das ein Reaktionsprodukt von einem Polyepoxid mit einem Molekulargewicht von mindestens 350, einem sekundären Amin und einem organischen Polyol mit mindestens zwei alkoholischen primären Hydroxylgruppen ist. Die Harze entstehen durch Kettenverlängerung von hochmolekularen Polyepoxiden mit mindestens 2 Epoxidgruppen pro Molekül. Die Kettenverlängerung wird durch ein organisches Polyol erreicht und die Wasserdispergierbarkeit wird durch Anlagerung eines sekundären Amins erzielt.

Dieses und andere bekannte Kunstharze für die kathodische Elektrotauchlackierung werden häufig für Grundierungen eingesetzt, d. h. die mit ihnen beschichteten Gegenstände erhalten eine zusätzliche Decklackschicht. Nachteilig können jedoch mit den bisher bekannten Harzen nur Beschichtungen mit relativ geringer Schichtdicke erreicht werden. So werden in der DE-OS-2 701 002 erreichbare Schichtdicken von nur 11,4 bis 18 µm angegeben. Wenn an eine Lackierung besonders hohe Anforderungen hinsichtlich der Korrosionsbeständigkeit und der Oberflächengüte gestellt werden, wie es z. B. bei der Lackierung von Kraftwagen und anderen hochwertigen Gütern der Fall ist, ist es daher bisher üblich, zwischen der Elektrotauchgrundierung und dem Decklack als zusätzliche Schicht einen sogenannten Füller aufzubringen. Dies ist aufwendig und kostenintensiv. Daher ist es wünschenswert, das Elektrotauchlackierverfahren so zu verbessern, daß bei diesem Verfahren größere Schichtdicken erreicht werden können. Bei dem Versuch, die Schichtdicke zu erhöhen, ergeben sich Probleme daraus, daß bei einer Erhöhung der Abscheidespannung über die Durchbruchspannung hinaus Oberflächenstörungen im Film durch Aufreißen der Schicht auftreten. Die Verlängerung der Beschichtungszeit ergibt ebenfalls eine Steigerung der Schichtdicke, doch läßt sich diese Steigerung nicht beliebig fortführen, denn es besteht normalerweise aufgrund des elektrischen Widerstandes des abgeschiedenen Films eine obere Grenze der Schichtdicke, bei der auch bei noch so langem Beschichten praktisch kein Schichtstärkenzuwachs mehr erreicht wird.

Aus der DE-OS-3 108 073 ist ein wasserdispergierbares Bindemittel für kationische Elektrotauchlacke bekannt, bei dessen Anwendung größere Schichtdicken des abgeschiedenen Films erzielt werden. Wenn auch dieses bekannte Bindemittel Überzüge mit ausgezeichneten Eigenschaften liefert, so stellt sich doch die Aufgabe, durch Modifizierung des Bindemittels die Elastizität der resultierenden Überzüge weiter zu verbessern.

Überraschenderweise wurde nun gefunden, daß Überzüge mit deutlich verbesserten Eigenschaften erzielt werden, wenn das verwendete Bindemittel nicht mit einem aliphatischen Diol kettenverlängert wird, sondern wenn hierzu Polyphenole eingesetzt werden. Bereits in der DE-OS-2 701 002 wird auf die Möglichkeit einer Konkurrenzreaktion der sekundären Hydroxylgruppen eines Epoxidharzes mit den noch verbleibenen Oxirangruppen bei einer Kettenverlängerung mit aliphatischen Polyolen hingewiesen. Insbesondere kann diese Nebenreaktion zum Ende des Kettenaufbaus überhandnehmen. Es ist das Verdienst der vorliegenden Erfindung, eine Möglichkeit aufzuzeigen, durch eine gesteigerte Reaktivität und Selektivität bei der Kettenverlängerung den Molekularaufbau eindeutig zu führen.

Der Erfindung liegt also die Aufgabe zugrunde, ein Bindemittel für kationische Elektrotauchlacke zu schaffen und bei dessen Verwendung Überzüge mit gesteigerter Schichtdicke und gleichzeitig hoher Elastizität und gutem Verlauf erzielt werden.

Diese Aufgabe wird bei einem Bindemittel der eingangsgenannten Art erfindungsgemäß dadurch gelöst, daß als Komponente C) 5 bis 40 Gewichts-%, bezogen auf die Summe der Komponenten A), B), C) und D) eines elastifizierten Polyphenols eingesetzt worden sind und der folgenden allgemeinen Formel entspricht.

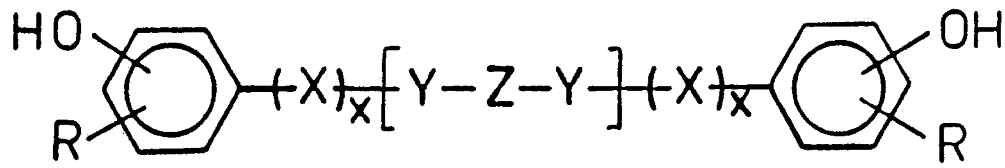

in der Formel bedeuten

X = Alkylen, Arylen, Alkarylen, O, O-Alkylen, O-Arylen, O-Alkarylen, S, S-Alkylen, S-Arylen, S-Alkarylen, -CO-, CO-Alkylen, CO-Arylen, CO-Alkarylen, $-SO_2-$, $SO_2$-Alkylen, $SO_2$-Arylen, $SO_2$-Alkarylen, NH, NH-Alkylen, NH-Arylen, NH-Alkarylen

x = 0 oder 1

Y= 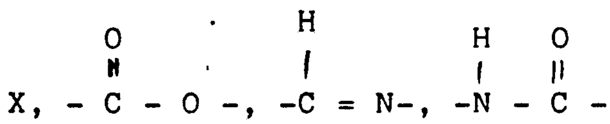

Z = Alkylen, Alkylenrest auf Basis von Polyestern, Polyethern, Polyamiden, Polycarbonaten, Polyurethanen

R = H, $CH_3$, Alkyl-, $-O-CH_3$, -O-Alkyl, $-NO_2$, $-NR'_2$, -NR'R'', -NHCOR'''.

Insbesondere der Rest Z, der vorzugsweise höhermolekular ist, dient zur Elastifizierung.

Für die Komponente A - niedermolekulare, aromatische Gruppen enthaltende Epoxidharze mit einem Epoxidäquivalentgewicht unter 375 - sind Polyepoxide geeignet. Als Polyepoxide können bei der vorliegenden Erfindung Materialien verwendet werden, die zwei oder mehr Epoxidgruppen im Molekül enthalten. Bevorzugt sind Verbindungen mit zwei Epoxidgruppen im Molekül. Die Polyepoxide haben ein relativ niedriges Molekulargewicht von höchstens 750, bevorzugt 400 bis 500. Die Polyepoxide können z. B. Polyglycidylether von Polyphenolen sein, wie Bisphenole, vorteilhaft z. B. Bisphenol A. Man kann diese Polyepoxide durch Veretherung eines Polyphenols mit einem Epihalohydrin in Gegenwart von Alkali herstellen. Beispiele für geeignete Phenolverbindungen sind Bis(4-hydroxyphenyl)-2,2-propan, 4,4'-Dihydroxybenzophenon, Bis(4-hydroxyphenyl)-1,1-ethan, Bis(4-hydroxyphenyl)-1,1-isobutan und Hydantoinepoxide.

Eine andere geeignete Klasse von Polyepoxiden sind Polyglycidylether von phenolischen Novolakharzen.

Vorteilhaft können auch Polyglycidylester von aromatischen Polycarbonsäuren verwendet werden.

Als Komponente B werden aliphatische und/oder alicyclische polyfunktionelle Alkohole oder Carbonsäuren mit einem Molekulargewicht unter 350 eingesetzt. Vorteilhaft weisen diese eine verzweigte aliphatische Kette, insbesondere mit mindestens einer Neostruktur auf.

Geeignete Verbindungen entsprechen der folgenden allgemeinen Formel:

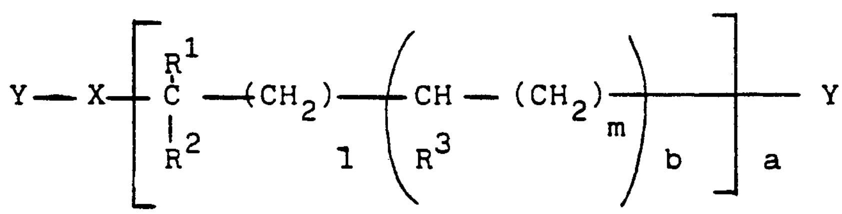

Hierin bedeuten

Y = OH, COOH

X = $(CH_2)_n$,

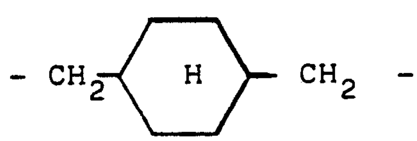

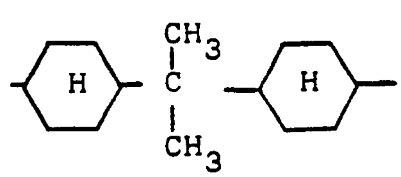

$R^1$, $R^2$, $R^3$ = H, Alkylrest mit 1 bis 5 C-Atomen

a = 0; 1
b = 0; 1
l = 0 - 10
m, n = 1 - 10

Als Beispiele seien genannt:

Diole, wie Ethylenglykol, Diglykol, Dipropylenglykol, Dibutylenglykol, Triglykol, 1,2-Propandiol, 1,3-Propandiol, 2,2-Dimethyl-1,3-propandiol, 2,2-Diethyl-1,3-propandiol, 2-Methyl-2-ethyl-1,3-propandiol, 2-Methyl-2-propyl-1,3-propandiol, 2-Ethyl-2-butyl-1,3-propandiol, 1,2-Butandiol, 1,4-Butandiol, 2,3-Butandiol, 2-Ethyl-1,4-butandiol, 2,2-Diethyl-1,3-butandiol, Buten-2-diol-1,4, 1,2-Pentandiol, 1,5-Pentandiol, 3-Methyl-1,5-Pentandiol, 1,6-Hexandiol, 2,5-Hexandiol, 2-Ethyl-1,3-hexandiol, 2,5-Dimethyl-2,5-hexandiol, 1,3-Octandiol, 4,5-Nonandiol, 2,10-Decandiol, 2-Hydroxyethyl-hydroxyacetat, 2,2-Dimethyl-3-hydroxypropyl-2,2-dimethylhydroxypropionat, 2-Methyl-2-propyl-3-hydroxypropyl-2-methyl-2-propylhydroxypropionat, 4,4'-Methylenbiscyclohexan und 4,4'-Isopropylidenbiscyclohexanol.

Einige bevorzugte Diole sind 2,2-Dimethyl-1,3-propandiol, 3-Methyl-1,5-pentandiol, 2,2-Dimethyl-3-hydroxypropyl-2,2-dimethylhydroxypropionat und 4,4'-Isopropylidenbiscyclohexanol.

Als Carbonsäuren für die Komponente B kommen eine Vielzahl von Dicarbonsäuren in Betracht, wie sie in der DE-OS-3 108 073 beschrieben werden.

Wesentlich ist es, daß die Verbindungen der Komponente B in einem solchen Verhältnis mit der Komponente A umgesetzt werden, daß das Umsetzungsprodukt den angegebenen Gehalt an aromatischen Gruppen, berechnet als Phenylengruppe, von 10 bis 45 % aufweist.

Das Epoxidharz wird durch die Komponente C kettenverlängert. Ihr Anteil an dem gesamten Bindemittel beträgt 5 bis 40 Gewichts-%, bezogen auf das gesamte Bindemittel. Für die Komponente C geeignete Polyphenole entsprechen der obenerläuterten allgemeinen Formel

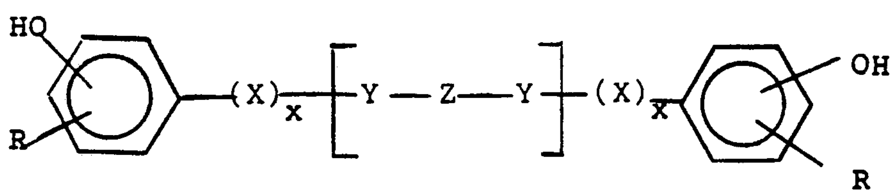

Die Komponente C) kann zum Beispiel vorteilhaft auf folgende Weise hergestellt werden. Ein Mol eines höhermolekularen Diols, z. B. eines Polyesterdiols, eines Polycaprolactondiols, eines Polyetherdiols, eines Polycarbonatdiols oder dergleichen, wird mit zwei Molen einer Hydroxyphenylcarbonsäure verestert oder mit zwei Molen eines Hydroxyphenylcarbonsäureesters umgesetzt. Geeignete Hydroxycarbonsäuren sind n-Hydroxybenzoesäure, n-Hydroxyphenylessigsäure und 3-(4-Hydroxyphenyl-)propionsäure oder deren Ester. Wird das Anhängen der Hydroxyphenylgruppe durch Umesterung durchgeführt, kann man auch eine basische Umesterung durchführen und hierzu die Alkaliphenolate der entsprechenden Hydroxyphenylcarbonsäureester einsetzen. Nach Reaktionsende muß das Produkt sauer aufgearbeitet werden, um das gewünschte Polyphenol zu erhalten.

Zur direkten Veresterung kann zum Beispiel auch N-(4-Hydroxyphenyl-)glycin eingesetzt werden. In einer weiteren Variante können beliebige, saure Polyester mit n-Hydroxyanilin zu den erwünschten Polyphenolen umgesetzt werden.

In einer anderen vorteilhaften Ausgestaltung werden Polyetherdiamine oder ähnliche Polyamine mit z. B. 4-Hydroxy-3-meth-oxybenzaldehyd zu den Polyphenolen umgesetzt.

Das Molekulargewicht der Komponente C beträgt bevorzugt 530 bis 3 000.

Das für die Umsetzung mit der Epoxidverbindung als Komponente D verwendete Amin kann primär, sekundär oder tertiär sein, wobei sekundäre Amine sich besonders gut eignen. Primäre und sekundäre Amine können direkt an den Epoxidring angelagert werden, tertiäre nur in Form ihrer Ammoniumsalze oder über eine weitere funktionelle Gruppe im Molekül. Bevorzugt sollte das Amin eine in Wasser lösliche Verbindung sein. Beispiele solcher Amine sind Mono- und Dialkylamine, wie Methylamin, Ethylamin, Propylamin, Butylamin, Dimethylamin, Diethylamin, Dipropylamin, Methylbutylamin und dergleichen. Geeignet sind ebenfalls Alkanolamine wie z. B. Methylethanolamin, Diethanolamin und dergleichen. Ferner sind Dialkylaminoalkylamine wie z. B. Dimethylaminoethylamin, Diethylaminopropylamin und dergleichen geeignet.

In den meisten Fällen werden niedermolekulare Amine verwendet, doch ist es auch möglich, höhermolekulare Amine anzuwenden, insbesondere dann, wenn die Absicht besteht, die Flexibilität des Harzes durch den Einbau solcher Amine zu erhöhen. In ähnlicher Weise kann man auch Mischungen aus niedermolekularen und höhermolekularen Aminen zur Modifizierung der Harzeigenschaften verwenden.

Polyamine mit primären und sekundären Aminogruppen können in Form ihrer Ketimine mit den Epoxidgruppen umgesetzt werden. Die Ketimine werden aus den Polyaminen in bekannter Weise hergestellt.

Die Amine können auch noch andere Gruppen enthalten, doch sollen diese die Umsetzung des Amins mit der Epoxygruppe nicht stören und auch nicht zu einer Gelierung der Reaktionsmischung führen.

Die Umsetzung des Amins mit der epoxygruppenhaltigen Verbindung tritt häufig schon beim Vermischen dieser Materialien ein. Es kann aber gegebenenfalls eine Erwärmung auf mäßig erhöhte Temperaturen

wünschenswert sein, z. B. auf 50 bis 150°C, doch sind Umsetzungen auch bei niedrigeren und höheren Temperaturen möglich. Häufig ist es vorteilhaft, zur Beendigung der Umsetzung die Temperatur gegen das Ende der Reaktion mindestens geringfügig für eine ausreichende Zeit zu erhöhen, um eine vollständige Umsetzung sicherzustellen.

Für die Umsetzung mit der epoxyhaltigen Verbindung sollte mindestens eine solche Menge an Amin verwendet werden, daß das Harz einen kationischen Charakter annimmt, d. h. daß es unter dem Einfluß einer Spannung in dem Beschichtungsbad zu der Kathode wandert, wenn es durch Zugabe einer Säure löslich gemacht worden ist. Es können im wesentlichen alle Epoxygruppen des Harzes mit einem Amin umgesetzt werden. Es ist aber auch möglich, überschüssige Epoxygruppen in dem Harz zu belassen, die bei der Berührung mit Wasser unter Bildung von Hydroxylgruppen hydrolisieren.

Eine weitere Möglichkeit, die erforderliche Wasserdispergierbarkeit zu erzielen, besteht darin, als Komponente D Mannich-Basen, d. h. Umsetzungsprodukte geeigneter, zur Reaktion mit einem Epoxidring geeignete Gruppen tragender Phenole mit Formaldehyd und einem sekundären Amin, zu verwenden. Hierdurch wird das Bindemittel gleichzeitig selbstvernetzbar.

Des weiteren können die Amine über Tscherniac-Einhorn-Michael-Addukte, an die Epoxidharze angelagert werden. Diese Addukte werden auf folgendem Syntheseweg hergestellt. Zunächst werden Phenole mit Methylol(meth)acrylamid zum Tscherniac-Einhorn-Zwischenprodukt umgesetzt, danach werden die Doppelbindungen mit Aminen belegt. Die Endprodukte können über die Phenolgruppe mit den Epoxidgruppen des Bindemittels umgesetzt werden.

Anstelle der genannten Amine oder zusammen mit diesen können auch das Salz eines Amins verwendet werden. Als Salz eines Amins kann das Salz eines tertiären Amins verwendet werden. Zur Neutralisation der Amine geeignete Säuren, die bei der Erfindung verwendet werden können, schließen Borsäure oder andere Säuren mit einer größeren Dissoziationskonstante als Borsäure ein, bevorzugt organische Säuren mit einer Dissoziationskonstante von größer als etwa $1 \times 10^{-5}$. Die bevorzugte Säure ist Essigsäure. Beispiele von anderen Säuren sind Ameisensäure, Milchsäure, Propionsäure, Buttersäure, Salzsäure, Phosphorsäure und Kohlensäure.

Der Aminanteil des Amin-Säuresalzes ist ein Amin, das unsubstituiert oder substituiert wie im Falle des Hydroxylamins sein kann, wobei diese Substituenten die Umsetzung des Amin-Säuresalzes mit dem Polyepoxid nicht stören sollen und die Reaktionsmischung nicht gelieren sollen. Bevorzugte Amine sind tertiäre Amine, wie Dimethylethanolamin, Triethylamin, Trimethylamin, Triisopropylamin und dergleichen. Beispiele von anderen geeigneten Aminen sind in der US-PS-3 839 252 in Spalte 5, Zeile 3 bis Spalte 7, Zeile 42 angegeben.

Die Amin-Säuresalzmischung wird durch Umsetzung des Amins mit der Säure in bekannter Weise erhalten. Es können auch Amin-Säuremischungen verwendet werden, obwohl sie in der Regel unter Bildung des Säuresalzes reagieren.

Die Reaktionstemperatur für die Umsetzung der Amin-Säuresalze mit den Polyepoxiden kann zwischen der niedrigsten Temperatur, bei der die Umsetzung mit einer nennenswerten Geschwindigkeit verläuft, z. B. Raumtemperatur oder in der Regel etwas höher als Raumtemperatur, bis zu einer maximalen Temperatur zwischen etwa 10 und 100°C variiert werden. Ein Lösungsmittel ist bei der Umsetzung nicht erforderlich, obwohl es häufig zugegeben wird, um die Reaktion besser steuern zu können. Als Lösungsmittel kommen aromatische Kohlenwasserstoffe oder Monoalkylether von Ethylenglykol in Betracht.

Die speziellen Ausgangsstoffe, Mengenanteile und Reaktionsbedingungen werden in Übereinstimmung mit den gut bekannten Erfahrungen so ausgewählt, daß eine Gelierung des Produktes während der Reaktion vermieden wird. So werden z. B. übermäßig aggressive Reaktionsbedingungen nicht verwendet. In ähnlicher Weise werden Ausgangsstoffe mit reaktionsfähigen Substituenten, die sich mit den Epoxyverbindungen umsetzen können, nicht benutzt, da sie die Reaktion nachteilig beeinflussen können.

Um unter Verwendung der erfindungsgemäßen Bindemittel hochbeständige Überzüge zu erhalten, ist es vorteilhaft dem Elektrotauchlack ein Vernetzungsmittel zuzusetzen, das bei erhöhten Temperaturen die Vernetzung des Bindemittels bewirkt, oder das Bindemittel so zu modifizieren, daß es reaktive Gruppen enthält, die bei erhöhten Temperaturen eine Selbstvernetzung bewirken. Ein selbstvernetzendes System kann vorteilhaft dadurch erhalten werden, daß das Bindemittel mit einem teilblockierten Polyisocyanat, das im Durchschnitt eine frei Isocyanatgruppe pro Molekül besitzt und dessen blockierte Isocyanatgruppen bei Raumtemperatur beständig sind und bei erhöhten Temperaturen entblockt werden und mit den durch die Öffnung der Epoxidringe entstandenen Hydroxylgruppen unter Urethanbildung reagieren. Das Bindemittel kann durch den Einsatz der bereits beschriebenen Mannich-Basen als Komponente D selbstvernetzbar sein.

Häufig angewandte Methoden zur Vernetzung von Bindemitteln sind z. B. in folgenden Offenlegungsschriften publiziert: DE-A-2 057 799, EP-A-0-012 463 und EP-A-0 004 090 und DE-A-2 752 256.

Wenn Vernetzungsmittel benutzt werden, machen sie in der Regel etwa 5 bis etwa 60 Gewichts-% des Bindemittels aus.

Bevorzugt sind etwa 20 bis 40 Gewichts-% des Bindemittels.

Beispiele von geeigneten Aminoplastvernetzungsmitteln sind der Hexamethylether von Hexamethylolmelamin, der Triethylmethylether von Hexamethylolmelamin, der Hexabutylether von Hexamethylolmelamin und der Hexamethylether von Hexamethylolmelamin und polymere butylierte Melaminformaldehydharze.

Man kann Harnstoff-Aldehydvernetzungsmittel in bekannter Weise herstellen, indem man Harnstoff und

einen Aldehyd bis zur Resolstufe umsetzt und das Umsetzungsprodukt mit einem Alkohol unter sauren Bedingungen alkyliert, wobei man ein alkyliertes Harnstoffaldehydharz erhält. Ein Beispiel von einem geeigneten Vernetzungsmittel auf Basis eines Harnstoffaldehydharzes ist ein butyliertes Harnstofformaldehydharz.

Als Vernetzungsmittel können auch blockierte Polyisocyanate eingesetzt werden. Es können bei der Erfindung beliebige Polyisocyanate benutzt werden, bei denen die Isocyanatgruppen mit einer Verbindung umgesetzt worden sind, so daß das gebildete blockierte Polyisocyanat gegenüber Hydroxylgruppen bei Raumtemperatur beständig ist, bei erhöhten Temperaturen, in der Regel im Bereich von etwa 90 bis etwa 300°C, aber reagiert. Bei der Herstellung der blockierten Polyisocyanate können beliebige, für die Vernetzung geeignete organische Polyisocyanate, verwendet werden.

Die bei der Erfindung als Vernetzungsmittel in Betracht kommenden organischen Polyisocyanate können auch Präpolymere sein, die sich beispielsweise von einem Polyol einschließlich eines Polyetherpolyols oder eines Polyesterpolyols ableiten.

Für die Blockierung der Polyisocyanate können beliebige geeignete aliphatische, cycloaliphatische oder aromatische Alkylmonoalkohole verwendet werden. Andere geeignete Blockierungsmittel sind Hydroxylamine und sekundäre Amine.

Die blockierten Polyisocyanate werden hergestellt, indem man eine ausreichende Menge des Blockierungsmittels mit dem organischen Polyisocyanat umsetzt, so daß keine freien Isocyanatgruppen mehr vorhanden sind. Die Umsetzung zwischen dem organischen Polyisocyanat und dem Blockierungsmittel ist exotherm. Deshalb werden das Polyisocyanat und das Blockierungsmittel bevorzugt bei einer Temperatur, die nicht höher als 80°C, insbesondere niedriger als 50°C ist, bemischt, um dem exothermen Effekt entgegenzuwirken.

Die Erfindung betrifft auch ein Verfahren zur Herstellung eines Bindemittels für kationische Elektrotauchlacke durch Umsetzung von

(A) niedermolekularen, aromatischen Gruppen enthaltenden Epoxidäquivalentgewicht unter 375 mit
(B) aliphatischen und/oder alizyklischen polyfunktionellen Alkoholen oder Carbonsäuren mit einem zahlenmittleren Molekulargewicht unter 350 derart, daß die Umsetzungsprodukte einen Anteil an aromatischen Gruppen, berechnet als Phenylengruppe, von 10 bis 45 Gewichts-% enthalten, und weitere Modifizierung des erhaltenen Zwischenprodukts mit
(C) einer Verbindung mit mindestens 2 Hydroxylgruppen und einem Molekulargewicht Über 350 unter Addition an die Epoxidgruppen und weitere Umsetzung des Reaktionsprodukts von (A), (B) und (C) mit
(D) primären und/oder sekundären Aminen oder Ammoniumsalzen zur Erzielung der erforderlichen Wasserdispergierbarkeit,

dadurch gekennzeichnet, daß als Komponente (C) 5 bis 40 Gewichts-%, bezogen auf die Summe der Komponenten (A), (B), (C) und (D), eines elastifizierten Polyphenols eingesetzt werden, das der obenerläuterten allgemeinen Formel

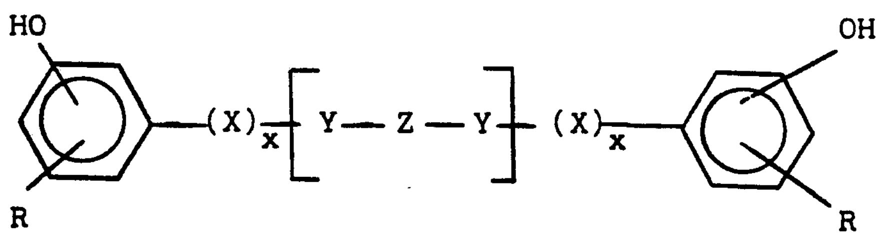

entspricht.

Das Verfahren wird folgendermaßen durchgeführt:

Die Komponente A und die Komponente B werden gemischt und gegebenenfalls unter Hinzugabe von Katalysatoren, z. B. tertiären Aminen, bei Temperaturen zwischen 100 und 140°C, vorzugsweise 115 bis 135°C, vollständig umgesetzt. Die Umsetzung kann anhand des Epoxidäquivalentgewichtes überprüft werden. Dieses Reaktionsprodukt aus den Komponenten A und B kann gegebenenfalls mit der Komponente C bei Temperaturen zwischen 100 und 140°C weiter modifiziert werden. Auch diese Umsetzung kann anhand des Epoxidäquivalentgewichtes kontrolliert werden. Das so erhaltene Reaktionsprodukt enthält noch freie Epoxidgruppen.

Für diesen Reaktionsschritt können die gleichen Katalysatoren verwendet werden wie bei der Umsetzung der Komponenten A und B. Das so erhaltene Reaktionsprodukt wird mit der Komponente D bei Temperaturen zwischen 90 und 140°C umgesetzt, so daß ein Bindemittel entsteht, das basische Aminogruppen enthält. Das basische Reaktionsprodukt kann durch Zugabe von Säuren ganz oder teilweise protonisiert werden und anschließend in Wasser dispergiert werden. Das Vernetzungsmittel kann vor der Dispergierung in Wasser dem Bindemittel zugemischt werden oder je nach Reaktivität während der Herstellung des Bindemittels zugeführt werden. Im Falle von teilblockierten Polyisocyanaten werden diese bei Temperaturen zwischen 80 und 150°C, vorzugsweise bei Temperaturen zwischen 100 und 130°C, mit dem Bindemittel umgesetzt. Die erhaltenen

Bindemittel stellen stabile, gut handhabbare Dispersionen dar. Gegebenenfalls kann es auch zweckmäßig sein, vor der Dispersionsherstellung die Bindemittel in geeigneten organischen Lösungsmitteln zu lösen. Geeignete Lösungsmittel sind z. B. Glykolether, Ethylglykol, Butylglykol, Ketone, wie Ethyldiethylketon, Methylethylketon, Methylisobutylketon und andere.

Die Erfindung betrifft ferner die Verwendung der Bindemittel für Elektrotauchbäder.

Um dem Kunstharz für die elektrische Abscheidung einen ausreichenden kationischen Charakter zu verleihen, wird im allgemeinen der neutralisierbare Stickstoff pro Gramm der gesamten Harzfeststoffe bevorzugt zwischen 0,3 und 3 Milliäquivalenten gehalten.

Wäßrige Dispersionen der erfindungsgemäßen Kunstharzprodukte sind als überzugsmassen sehr geeignet, insbesondere für die Herstellung von Überzügen durch elektrische Abscheidung. Die Überzugsmassen können aber auch in konventioneller Art und Weise auf die Substrate aufgebracht werden. Für die Dispergierung in Wasser werden die harzartigen Produkte neutralisiert, um kationische Gruppen zu bilden, z. B. Salze von tertiären Aminen und, im Falle von hydrolisierten ketiminhaltigen Harzen, Salze von primären Aminen.

Die Neutralisierung der Produkte wird durch Umsetzung eines Teils oder aller Aminogruppen durch eine wasserlösliche Säure, z. B. Ameisensäure, Essigsäure oder Phosphorsäure, erreicht. Der Grad der Neutralisation hängt von dem besonderen Harz ab und es ist im allgemeinen ausreichend, daß nur soviel Säure zugesetzt wird, daß das Harz in Wasser dispergierbar ist.

Die Konzentration der harzartigen Produkte in dem wässrigen Medium hängt von den zu verwendenden Verfahrensparametern ab und ist in der Regel nicht kritisch. Üblicherweise bildet Wasser den Hauptanteil der wässrigen Dispersion. Die wässrige Dispersion kann z. B. etwa 5 bis etwa 50 Gew.-% Harzfeststoffe enthalten.

Die Elektrotauchbäder können übliche Pigmente enthalten. Häufig wird den Pigmenten ein Dispergiermittel oder ein oberflächenaktives Mittel zugesetzt. Das Pigment und das gegebenenfalls verwendete oberflächenaktive Mittel werden zusammen in einem Teil des Bindemittels oder allein gemahlen, um eine Paste herzustellen, die mit dem restlichen Bindemittel zur Herstellung der Oberzugsmasse verschnitten wird.

In manchen Fällen ist es vorteilhaft, dem Elektrotauchbad ein nicht ionisches Modifizierungsmittel oder Lösungsmittel zuzusetzen, um die Dispergierbarkeit, die Viskosität und/oder die Filmqualität zu verbessern. Beispiele von solchen Materialien sind aliphatische, naphthenische und aromatische Kohlenwasserstoffe oder Mischungen davon; Mono- und Dialkylether von Glykolen, sibirischen Fichennadelöl und andere Lösungsmittel, die mit dem Harzsystem verträglich sind.

Dem Elektrotauchbad können außerdem noch andere Zusatzstoffe, wie Antioxidantien zugesetzt werden. Beispiele dafür sind ortho-Amylphenol oder Kresol. Die Zugabe solcher Antioxidantien ist dann besonders erwünscht, wenn die Abscheidungsbäder atmosphärischem Sauerstoff bei erhöhten Temperaturen unter Rühren für längere Zeiträume ausgesetzt sind.

Andere Zusätze, die das Bad gegebenenfalls enthalten kann, sind Netzmittel, wie Erdölsulfonate, sulfatierte Fettamine oder ihre Amide, Alkylphenoxypolyethylenalkanole oder Phosphatester, einschließlich von ethoxilierten Alkylphenolphosphaten. Andere Gruppen von möglichen Zusätzen sind Antischaummittel und Suspendiermittel. Für die Formulierung des Abscheidungsbades kann normales Leitungswasser verwendet werden. Da ein derartiges Wasser aber relativ hohe Anteile an Salzen enthält, können dadurch unerwünschte Änderungen bei der elektrischen Abscheidung auftreten. Es wird deshalb im allgemeinen entionisiertes Wasser bevorzugt.

Die nachstehend aufgeführten möglichen Zusätze sind nicht vollständig, da beliebige andere Zusätze, die bei der elektrischen Abscheidung nicht stören, benutzt werden können.

Die Erfindung betrifft weiterhin ein Verfahren zum elektrophoretischen Beschichten eines elektrisch leitenden als Kathode geschalteten Substrats aus einem wässrigen Bad auf Basis mindestens teilweise mit Säuren neutralisierter kationischer Bindemittel, wobei die Bindemittel durch Umsetzung selbstvernetzbar gemischt worden sind oder das Bad ein zusätzliches Vernetzungsmittel enthält, dadurch gekennzeichnet, daß die Bindemittel Reaktionsprodukte von

A) niedermolekularen, aromatische Gruppen enthaltenden Epoxidharzen mit einem Epoxidäquivalentgewicht unter 375,
B) aliphatischen und/oder alicyclischen polyfunktionellen Alkoholen und/oder Carbonsäuren mit einem Molekulargewicht unter 350,
C) elastifizierten Polyphenolen mit einem Molekulargewicht über 350, die der folgenden allgemeinen Formel entsprechen

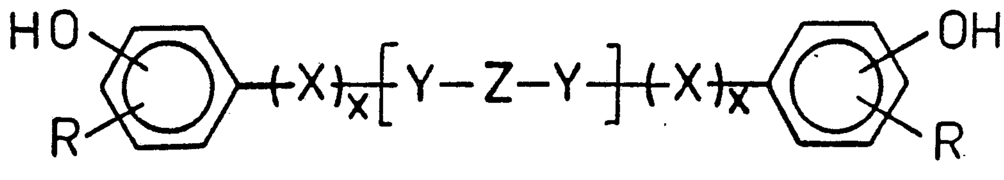

in der bedeuten:

X = Alkylen, Arylen, Alkarylen, O, O-Alkylen, O-Arylen, O-Alkarylen, S, S-Alkylen, S-Arylen, S-Alkarylen, -CO-, CO-Alkylen, CO-Arylen, CO-Alkarylen, $-SO_2-$, $SO_2$-Alkylen, $SO_2$-Arylen, $SO_2$-Alkarylen, NH, NH-Alkylen, NH-Arylen, NH-Alkarylen

x = 0 oder 1

$$Y = X, -\overset{\overset{\displaystyle O}{\|}}{C}-O-,\ -\overset{\overset{\displaystyle H}{|}}{C}=N-,\ -\overset{\overset{\displaystyle H}{|}}{N}-\overset{\overset{\displaystyle O}{\|}}{C}-$$

Z = Alkylen, Alkylenreste auf Basis von Polyestern, Polyethern, Polyamiden, Polycarbonaten, Polyurethanen

R = H, $CH_3$, Alkyl, $-O-CH_3$, -O-Alkyl, $NO_2$, $-NR'_2$, -NH'R'', -NHCOR'''

D) primären und/oder sekundären Aminen und/oder Ammoniumsalzen sind, wobei das Umsetzungsprodukt aus A und B einen Gehalt an aromatischen Gruppen, berechnet als Phenylengruppe, von 10 - 45 % enthält.

Als Substrat kann bei der elektrischen Abscheidung ein beliebiges elektrisch leitendes Substrat dienen. Üblicherweise handelt es sich dabei um Metallsubstrate, wie z. B. Eisen, Stahl, Kupfer, Zink, Messing, Zinn, Nickel, Chrom und Aluminium sowie um andere Metalle, vorbehandelte Metalle, phosphatierte oder chromatierte Metalle. Auch imprägniertes Papier und andere leitende Substrate können benutzt werden.

Bei der kationischen Abscheidung werden die zu überziehenden Gegenstände in eine wässrige Dispersion des solubilisierten filmbildenden kationischen Bindemittels eingetaucht. Es wird eine elektrische Spannung zwischen dem zu überziehenden Gegenstand, der als Kathode dient, und einer Anode angelegt und das kationische Bindemittel wird durch den elektrischen Strom auf der Kathode abgeschieden. Der Gegenstand wird dann aus dem Bad entnommen und in der Regel abgespült. Dann wird der Überzug in üblicher Weise durch Erwärmen ausgehärtet.

Die Erfindung wird in den folgenden Beispielen noch näher erläutert. Alle Angaben über Teile und Prozentsätze sind Gewichtsangaben, falls nicht ausdrücklich etwas anderes festgestellt wird.

**Darstellung eines Vernetzungsmittels I**

Ein Reaktor, der mit einer Heizvorrichtung, einem Kühler, einem Rührer, einem Thermometer, einer Ausgangsleitung, die zu einer Waschvorrichtung führt, und einer Einrichtung zum Einleiten von Stickstoff ausgerüstet wird, wird mit 12 280 Teilen Toluylendiisocyanat (Mischung aus etwa 80 % 2,4-Toluylendiisocyanat und etwa 20 % 2,6-Toluylendiisocyanat) beschickt. Es wird Stickstoff eingeleitet und der Kühler wird eingeschaltet. Im Verlauf von 5 Stunden werden 5 550,5 Teile 2-Ethylhexanol allmählich zugegeben, wobei die Temperatur allmählich auf 50°C steigt. Während die Temperatur von 50°C aufrechterhalten wird, werden weitere 3 649,5 Teile 2-Ethylhexanol im Verlauf von 4 Stunden zugegeben. Die Reaktionsmischung wird 75 Minuten bei 50°C gehalten, dann wird der Kühler abgeschaltet und es werden 3,6 Teile Dibutylzinndilaurat zugegeben. Die Heizvorrichtung wird angeschaltet und die Reaktionsmischung wird im Verlauf von 45 Minuten auf 65°C erwärmt. Im Verlauf von zwei Stunden und 50 Minuten werden 3 184 Teile 1,1,1-Trimethylolpropan zugegeben, wobei die Temperatur von 65 auf 120°C steigt. Die Reaktionsmischung wird bei dieser Temperatur 90 Minuten gehalten, dann werden 10 560 Teile 2-Ethoxiethanol zugegeben. Das entstandene Produkt ist eine Lösung eines Polyurethanvernetzungsmittels.

**Darstellung eines Vernetzungsmittels II**

2 340 g Glycidylester der 2-Methyl-2-Ethylheptansäure werden mit 2 073 g Trimellithsäureanhydrid in einem Reaktionsgefäß auf 130°C erhitzt. Hierbei springt die stark exotherme Reaktion an. Durch externe Kühlung wird die Reaktion bei 150°C gehalten, bis eine Säurezahl von 183 erreicht ist. Danach kühlt man auf 90°C ab und setzt 1 450 g MIBK* zu. Anschließend tropft man 835 g Propylenoxid langsam zu. Bei einer Säurezahl 2 wird die Reaktion abgebrochen. Der Festkörper der Harzlösung wird mit weiterem MIBK* auf 70 % eingestellt.

*MIBK = Methylisobutylketon

**Darstellung eines elastifizierten Polyphenols I**

In einem geeigneten Reaktionsgefäß mit Schutzgaseinleitung, werden 500 g eines Polycaprolactondiols (OH-Zahl 210,9) und 286 g p-Hydroxybenzoesäuremethylester vorgelegt. Die Mischung wird auf 140°C aufgeheizt und homogenisiert. Danach gibt man 3,9 g Zinnoctoat zu und erhitzt auf 180°C. Hierbei beginnt die Methanolabspaltung. Nach Ende der Abspaltung läßt man noch eine Stunde bei 180°C rühren und kühlt danach das Produkt ab.

**Darstellung eines elastifizierten Polyphenols II**

Man verfährt wie bei der Darstellung des Polyphenols I jedoch werden anstelle des Polycaprolactondiols (OH-Zahl 152) 695 g eines Polytetrahydrofurandiols eingesetzt.

**Darstellung eines elastifizierten Polyphenols III**

In einem geeigneten Reaktor werden 550 g Adipinsäure, 262 g Neopentylglykol, 49 g Xylol und 0,8 g Dibutylzinnoxid vorgelegt und erhitzt. Bei 132°C beginnt die Wasserabscheidung. Man steigert die Temperatur langsam auf 186°C und hält sie solange, bis die entsprechende Wassermenge ausgekreist ist (90 g). Danach kühlt man auf 100°C und gibt 274 g p-Aminophenol zu. Dann steigert man die Temperatur erneut, bei 162°C setzt eine erneute Wasserabspaltung ein. Man steigert die Temperatur langsam auf 185°C und hält sie konstant, bis 45 g Wasser abgespalten sind. Danach destilliert man das Xylol ab. Zur Einbringung des elastifizierten Bindemittels in die Harze wird das Polyphenol auf 100°C vorgewärmt.

**Darstellung eines Bindemittels I**

In einem geeigneten 5 l Reaktionsgefäß werden 1041 g eines handelsüblichen Epoxidharzes auf Basis Bisphenol A (Epoxidäquivalentgewicht 188), 41 g Xylol und 144 g Neopentylglykol vorgelegt und auf 125°C erhitzt. Dann setzt man 4,7 ml Dimethylbenzylamin zu und erhitzt auf 130°C. Sobald das Epoxidäquivalentgewicht von 417 erreicht ist, gibt man 358 g des elastifizierten Polyphenols I, 19 g Xylol und 1,8 ml Dimethylbenzylamin zu und erhitzt auf 160°C. Sobald ein Epoxidäquivalentgewicht von 1 233 erreicht ist, gibt man 1 202 g des Vernetzungsmittels I, 113 g eines Ketimins und 82 g Methylethanolamin zu und führt die Reaktion 1 h bei 115°C weiter. Danach fügt man 38 g Propylenglykolmonomethylether zu und mischt 15 Minuten unter. Inzwischen bereitet man aus 1 927 g entionisiertem Wasser, 31,9 g Eisessig, 11,5 g Butylglykol und 11,5 g eines handelsüblichen Entschäumers ein Dispergierbad vor.

Darin werden 2 500 g des obenbeschriebenen Bindemittels dispergiert. Nach einer Stunde fügt man weitere 1 187 g entionisiertes Wasser zu und mischt 30 Minuten unter.

| | |
|---|---|
| Festkörper | 38,2 % |
| ph-Wert | 7,2 |
| MEQ-Säure | 0,2880 |
| MEQ-Base | 0,6243 |

**Darstellung eines Bindemittels II**

Es wird entsprechend der Vorschrift für das Bindemittel I gearbeitet, jedoch wird hierbei das elastifizierte Polyphenol II und das Vernetzungsmittel II eingesetzt.

| | | |
|---|---|---|
| Epoxidharz (EEW 188) | 917 | Teile |
| Xylol | 36 | Teile |
| Neopentylglykol | 127 | Teile |
| Dimethylbenzylamin | 3,6 | Teile |
| Polyphenol II | 547 | Teile |
| Dimethylbenzylamin | 2,8 | Teile |
| Vernetzungsmittel II | 1 202 | Teile |
| Ketimin | 100 | Teile |
| Methylethanolamin | 72 | Teile |
| Propylenglykolmonophenylether | 127 | Teile |
| Ethylglykol | 38 | Teile |

| | | |
|---|---|---|
| Harzlösung | 2 500 | Teile |
| entionisiertes Wasser | 1 855 | Teile |
| Eisessig | 27 | Teile |
| Entschäumer | 10 | Teile |
| Butylglykol | 10 | Teile |
| entionisiertes Wasser | 1 164 | Teile |

Die Dispersion wird danach im Vakuum auf 60° C erhitzt. Dabei werden 310 ml organische Phase abgezogen. Nach dem Abkühlen wird die Dispersion filtriert. Sie weist folgende Kennwerte auf.

Kenndaten der Dispersion:

| | |
|---|---|
| Festkörper (30', 150° C) | 37,2 % |
| pH-Wert | 6,8 |
| MEQ-Säure | 0,3142 |
| MEQ-Base | 0,5918 |

**Darstellung eines Bindemittels III**

Es wird entsprechend der Vorschrift für das Bindemittel I gearbeitet, jedoch wird hierbei das elastifizierte Polyphenol II eingesetzt.

| | | |
|---|---|---|
| Epoxidharz (EEW 188) | 966 | Teile |
| Xylol | 38 | Teile |
| Neopentylglykol | 133 | Teile |
| Dimethylbenzylamin | 3,8 | Teile |
| Polyphenol II | 480 | Teile |
| Dimethylbenzylamin | 3 | Teile |
| Vernetzungsmittel I | 1 201 | Teile |
| Ketimin | 105 | Teile |
| Methylethanolamin | 75 | Teile |
| Propylenglykolmonophenylether | 127 | Teile |
| Ethylglykol | 38 | Teile |

| | | |
|---|---|---|
| Harzlösung | 2 500 | Teile |
| entionisiertes Wasser | 1 855 | Teile |
| Eisessig | 29 | Teile |
| Entschäumer | 10 | Teile |
| Butylglykol | 10 | Teile |
| entionisiertes Wasser | 1 165 | Teile |

Kenndaten der Dispersion III

| | |
|---|---|
| Festkörper (30', 150° C) | 35,1 % |
| pH-Wert | 7,3 |
| MEQ-Säure | 0,3098 |
| MEQ-Base | 0,6301 |

**Darstellung einer grauen Pigmentpaste**

Zu 953 Teilen eines handelsüblichen Epoxidharzes auf Basis Bisphenol A mit einem Epoxidäquivalentgewicht von 890 werden 800 Teile Butylglykol gegeben. Die Mischung wird auf 80°C erhitzt. In die Harzlösung werden dann 221 Teile eines Umsetzungsproduktes aus 101 Teilen Diethanolamin und 120 Teilen 80 %-iger wässriger Milchsäure gegeben. Man führt die Reaktion bei 80°C durch bis die Säurezahl unter 1 gefallen ist.

1 800 Teile dieses Produkts werden mit 2 447 Teilen entionisiertem Wasser vorgelegt und mit 2 460 Teilen $TiO_2$, 590 Teilen eines Extenders auf Basis Aluminiumsilikat, 135 Teilen Bleisilikat und 37 Teilen Ruß vermengt. Diese Mischung wird in einem Mahlaggregat auf eine Hegman-Feinhelt von 5 bis 7 zerkleinert. Danach gibt man 1 255 Teile entionisiertes Wasser zu, um die gewünschte Psstenkonsistenz zu erreichen. Diese graue Paste ist sehr lagerstabil.

**Zubereitung der Elektrotauchbäder und Abscheidung von Lackfilmen**

Jeweils 2 000 Gewichtsteile der obenbeschriebenen Bindemitteldispersionen werden mit 775 Gewichtstellen der grauen Pigmentpaste vermischt. Der Badfestkörper wird mit entionisiertem Wasser auf 20 % (150°C, 30') eingestellt. Man läßt das Bad 3 Tage unter Rühren altern. Die Abscheidung der Lackfilme erfolgt während 2 Minuten auf zinkphosphatiertem Blech. Die Badtemperatur beträgt hierbei 27°C. Die abgeschiedenen Filme werden bei 180°C während 20 Minuten eingebrannt.

| | Dispersion I | Dispersion II | Dispersion III |
|---|---|---|---|
| Abscheidespannung (V) | 290 | 310 | 310 |
| Filmdicke µm | 32 | 37 | 35 |
| Glitterschnitt* | 0 | 0 | 0 |
| Haftung | gut | sehr gut | sehr gut |
| Verlauf* | 1,5 | 1,0 | 1,0 |
| Erichsen-Tiefung (mm) | 9,8 mm | 8,3 mm | 9,4 mm |
| Vernetzung** | i.O. | i.O. | i.O. |

* 0 bester Wert, 5 schlechtester Wert
** 20 Doppelhübe MIBK

**Patentansprüche**

1. Wasserdispergierbare Bindemittel für kationische Elektrotauchlacke, erhalten durch Umsetzung von

A) niedermolekularen, aromatische Gruppen enthaltenden Epoxidharzen mit einem Epoxidäquivalentgewicht unter 375 mit

B) aliphatischen und/oder alicyclischen polyfunktionellen Alkoholen und/oder Carbonsäuren mit einem zahlenmittleren Molekulargewicht unter 350 zu einem epoxidgruppenhaltigen Zwischenprodukt, das einen Anteil an aromatischen Gruppen, berechnet als Phenylengruppe, von 10 bis 45 Gewichts-% enthält, und weitere Modifizierung des erhaltenen Zwischenprodukts mit

C) einer Verbindung mit mindestens 2 Hydroxylgruppen unter Addition an die Epoxidgruppen und weitere Umsetzung des Reaktionsproduktes von A), B) und C) mit

D) primären und/oder sekundären Aminen oder Ammoniumsalzen zur Erzielung der erforderlichen Wasserdispergierbarkeit, dadurch gekennzeichnet, daß die Komponente C) ein elastifiziertes Polyphenol mit einem Molekulargewicht über 350 ist, das der allgemeinen Formel

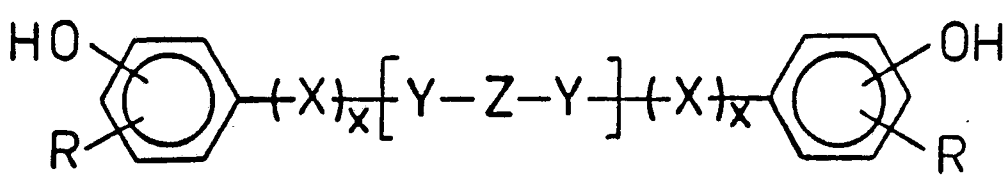

in der bedeuten:

X = Alkylen, Arylen, Alkarylen, O, O-Alkylen, O-Arylen, O-Alkarylen, S, S-Alkylen, S-Arylen, S-Alkarylen, -CO-, CO-Alkylen, CO-Arylen, CO-Alkarylen, $-SO_2-$' $SO_2$-Alkylen, $SO_2$-Arylen, $SO_2$-Alkarylen, NH, NH-Alkylen, NH-Arylen, NH-Alkarylen

x = 0 oder 1

$$Y = X, -\overset{O}{\overset{\|}{C}}-O-, \quad -\overset{H}{\overset{|}{C}}=N-, \quad -\overset{H}{\overset{|}{N}}-\overset{O}{\overset{\|}{C}}-$$

Z = Alkylen, Alkylen auf Basis von Polyestern, Polyethern, Polyamiden, Polycarbonaten, Polyurethanen

R = H, $CH_3$, Alkyl, $-O-CH_3$, -O-Alkyl, $-NO_2$, $-NR'_2$, -NR'R'', -NHCOR'''

entspricht.

2. Bindemittel nach Anspruch 1, dadurch gekennzeichnet, daß die Komponente A ein Epoxidharz auf Basis Bisphenol A ist.

3. Bindemittel nach Anspruch 1, dadurch gekennzeichnet, daß die Komponente A ein Polyglycidylester ist.

4. Bindemittel nach einem der Ansprüche 1 bis 3, dadurch gekennzeichnet, daß die Komponente B ein Diol oder eine Dicarbonsäure mit einer verzweigten aliphatischen Kette ist.

5. Bindemittel nach einem der Ansprüche 1 bis 4, dadurch gekennzeichnet, daß die Komponente B ein Diol oder eine Dicarbonsäure mit mindestens einer Neostruktur ist.

6. Bindemittel nach einem der Ansprüche 1 bis 5, dadurch gekennzeichnet, daß das Molekulargewicht der Komponente C 530 - 3 000 beträgt.

7. Bindemittel nach einem der Ansprüche 1 bis 6, dadurch gekennzeichnet, daß der Anteil der Komponente C 5 - 40 Gew.-%, bezogen auf das gesamte Bindemittel, beträgt.

8. Bindemittel nach einem der Ansprüche 1 bis 7, dadurch gekennzeichnet, daß sie mit einem teilblockierten Polyisocyanat, das im Durchschnitt eine freie Isocyanatgruppe pro Molekül besitzt und dessen blockierte Isocyanatgruppen bei Raumtemperstur beständig sind, umgesetzt worden sind.

9. Verfahren zur Herstellung von Bindemitteln für kationische Elektrotauchlacke auf der Basis von Umsetzungsprodukten von modifizierten Epoxidharzen und primären, sekundären und/oder tertiären Aminen sowie Ammoniumsalzen oder Sulfid/Säure- bzw. Phosphin/Säuremischungen, die gegebenenfalls Vernetzungsmittel, Pigmente, Verlaufmittel und andere übliche Hilfsmittel enthalten, dadurch gekennzeichnet, daß

A) niedermolekulare, aromatische Gruppen enthaltende Epoxidharze mit einem Epoxidäquivalentgewicht unter 375 mit

B) aliphatischen und/oder alicyclischen polyfunktionellen Alkoholen oder Carbonsäuren mit einem Molekulargewicht unter 350 unter Addition an die Epoxidgruppen zu einem noch Epoxidgruppen enthaltenden Zwischenprodukt derart umgesetzt werden, daß das Zwischenprodukt einen Anteil an aromatischen Gruppen, berechnet als Phenylengruppe, von 10 - 45 % enthält und dieses Zwischenprodukt mit

C) einem elastifizierten Polyphenol mit einem Molekulargewicht über 350, das der folgenden allgemeinen Formel entspricht

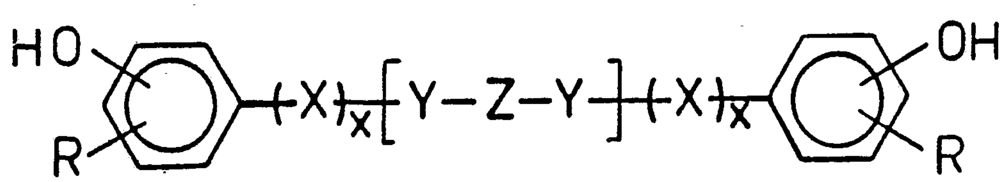

in der bedeuten

X = Alkylen, Arylen, Alkarylen, O, O-Alkylen, O-Arylen, O-Alkarylen, S, S-Alkylen, S-Arylen, S-Alkarylen, -CO-, CO-Alkylen, CO-Arylen, CO-Alkarylen, $-SO_2-$, $SO_2$-Alkylen, $SO_2$-Arylen, $SO_2$-Alkarylen, NH, NH-Alkylen, NH-Arylen, NH-Alkarylen

X = 0 oder 1

$$Y = X, -\overset{O}{\overset{\|}{C}}-O-, \quad -\overset{H}{\overset{|}{C}}=N-, \quad -\overset{H}{\overset{|}{N}}-\overset{O}{\overset{\|}{C}}-$$

Z = Alkylen, Alkylenreste auf Basis von Polyestern, Polyethern, Polyamiden, Polycarbonaten, Polyurethanen

R = H, $CH_3$, Alkyl-, $-O-CH_3$, -O-Alkyl, $-NO_2$, $-NR'_2$, -NR'R'', -NHCOR'''

sowie zur Erzielung der erforderlichen Wasserdispergierbarkeit mit

D) primären und/oder sekundären Aminen und/oder deren Salzen weiter modifiziert wird.

10. Verfahren nach Anspruch 9, dadurch gekennzeichnet, daß als Komponente A Epoxidharze auf Basis Bisphenol A verwendet werden.

11. Verfahren nach Anspruch 9, dadurch gekennzeichnet, daß als Epoxidharz Polyglycidylester verwendet werden.

12. Verfahren nach einem der Ansprüche 9 bis 11, dadurch gekennzeichnet, daß als Komponente B ein Diol oder eine Dicarbonsäure mit einer verzweigten aliphatischen Kette verwendet wird.

13. Verfahren nach einem der Ansprüche 9 bis 12, dadurch gekennzeichnet, daß als Komponente B ein Diol oder eine Dicarbonsäure mit mindestens einer Neostruktur verwendet wird.

14. Verfahren nach einem der Ansprüche 9 bis 13, dadurch gekennzeichnet, daß das Molekulargewicht der Komponente C 530 - 3 000 beträgt.

15. Verfahren nach einem der Ansprüche 9 bis 14, dadurch gekennzeichnet, daß der Anteil der Komponente C 5 - 40 Gew.-%, bezogen auf das gesamte Bindemittel, beträgt.

16. Verfahren nach einem der Ansprüche 9 bis 15, dadurch gekennzeichnet, daß das Bindemittel mit einem teilblockierten Polyisocyanat, das im Durchschnitt eine freie Isocyanatgruppe pro Molekül besitzt und dessen blockierte Isocyanatgruppen bei Raumtemperatur beständig sind, umgesetzt wird.

17. Verwendung der Bindemittel nach einem der Ansprüche 1 bis 8, für Elektrotauchbäder.

18. Verfahren zum elektrophoretischen Beschichten eines elektrisch leitenden als Kathode geschalteten Substrats aus einem wäßrigen Bad auf Basis mindestens teilweise mit Säuren neutralisierter kationischer Bindemittel, wobei die Bindemittel durch Umsetzung selbstvernetzbar gemacht worden sind oder das Bad ein zusätzliches Vernetzungsmittel enthält, dadurch gekennzeichnet, daß die Bindemittel Reaktionsprodukte von

A) niedermolekularen, aromatische Gruppen enthaltenden Epoxidharzen mit einem Epoxidäqulvalentgewicht unter 375,

B) aliphatischen und/oder alicyclischen polyfunktionellen Alkoholen und/oder Carbonsäuren mit einem Molekulargewicht unter 350,

C) elastifizierten Polyphenolen mit einem Molekulargewicht über 350, die der folgenden allgemeinen Formel entsprechen

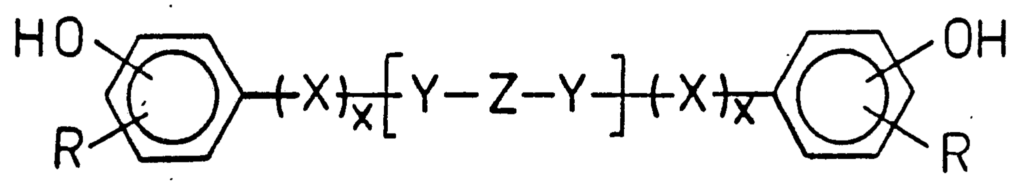

in der bedeuten:

X = Alkylen, Arylen, Alkarylen, O, O-Alkylen, o-Arylen, O-Alkarylen, S, S-Alkylen, S-Arylen, S-Alkarylen, -CO-, CO-Alkylen, CO-Arylen, CO-Alkarylen, $-SO_2-$, $SO_2$-Alkylen, $SO_2$-Arylen, $SO_2$-Alkarylen, NH, NH-Alkylen, NH-Arylen, NH-Alkarylen

x = 0 oder 1

Y = X, $-C(=O)-O-$, $-C(H)=N-$, $-N(H)-C(=O)-$

Z = Alkylen, Alkylenreste auf Basis von Polyestern, Polyethern, Polyamiden, Polycarbonaten, Polyurethanen

R = H, $CH_3$, Alkyl-, $-O-CH_3$, -O-Alkyl, $NO_2$, $-N'_2$ -NR'R'', -NHCOR'''

D) primären und/oder sekundären Aminen und/oder Ammoniumsalzen sind, wobei das Umsetzunpsprodukt aus A und B einen Gehalt an aromatischen Gruppen, berechnet als Phenylengruppe, von 10 - 45 % enthält.

19. Verfahren nach Anspruch 18, dadurch gekennzeichnet, daß die Komponente A ein Epoxidharz auf Basis Bisphenol A ist.

20. Verfahren nach Anspruch 18, dadurch gekennzeichnet, daß die Komponente A ein Polyglycidylester ist.

21. Verfahren nach einem der Ansprüche 18 bis 20, dadurch gekennzeichnet, daß die Komponente B ein Diol oder eine Dicarbonsäure mit einer verzweigten aliphatischen Kette ist.

22. Verfahren nach einem der Ansprüche 18 bis 21, dadurch gekennzeichnet, daß die Komponente B ein Diol oder eine Dicarbonsäure mit mindestens einer Neostruktur ist.

23. Verfahren nach einem der Ansprüche 18 bis 22, dadurch gekennzeichnet, daß das Molekulargewicht der Komponente C 530 - 3 000 beträgt.

24. Verfahren nach einem der Ansprüche 18 bis 23, dadurch gekennzeichnet, daß der Anteil der Komponente C 5 bis 40 Gew.-%, bezogen auf das gesamte Bindemittel, beträgt.

**Claims**

1. Water-dispersible binders for cationic electro- coating paints, obtained by reacting

A) low-molecular epoxy resins containing aromatic groups and having an epoxide equivalent weight below 375 with

B) aliphatic and/or alicyclic polyfunctional alcohols and/or carboxylic acids of a number average molecular weight below 350 to form an intermediate which contains epoxide groups and which contains a proportion of 10 to 45 % by weight of aromatic groups, calculated as phenylene group, and by further modifying the resultant intermediate with

C) a compound having at least 2 hydroxyl groups with addition to the epoxide groups, and by further reacting the reaction product from A), B) and C) with

D) primary and/or secondary amines or ammonium salts to achieve the required water dispersibility, characterized in that the component C) is an elastified polyphenol of a molecular weight greater than 350 which corresponds to the general formula

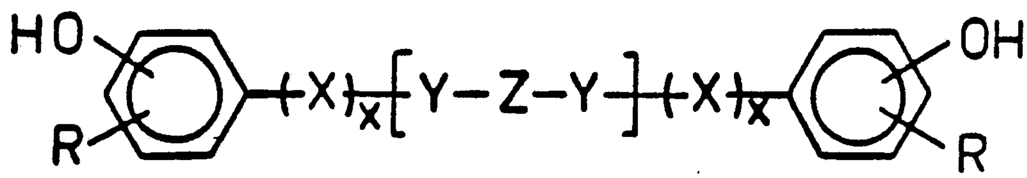

in which

X denotes alkylene, arylene, alkarylene, O, O-alkylene, O-arylene, O-alkarylene, S, S-alkylene, S-arylene, S-alkarylene, -CO-, CO-alkylene, CO-arylene, CO-alkarylene, $-SO_2-$, $SO_2$-alkylene, $SO_2$-arylene, $SO_2$-alkarylene, NH, NH-alkylene, NH-arylene, NH-alkarylene

x denotes 0 or 1

Y deonotes X, 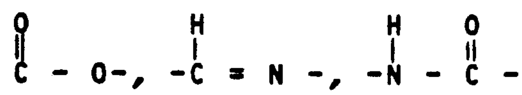

Z denotes alkylene, alkylene based on polyesters, polyelher polyamides, polycarbonates and polyurethanes

R denotes H, $CH_3$, alkyl, $-O-CH_3$, -O-alkyl, $-NO_2$, $-NR'_2$, -NR'R'', -NHCOR'''

2. Binders according to Claim 1, characterized in that the component A is an epoxy resin based on bisphenol A.

3. Binders according to Claim 1, characterized in that the component A is a polyglycidyl ester.

4. Binders according to one of Claims 1 to 3, characterized in that the component B is a diol or a dicarboxylic acid with a branched aliphalic chain.

5. Binders according to one of Claims 1 to 4, characterized in that the component B is a diol or a dicarboxylic acid with at least one neostructure.

6. Binders according to one of Claims 1 to 5, characterized in that the molecular weight of the component C is 530 - 3,000.

7. Binders according to one of Claims 1 to 6, characterized in that the proportion of the component C is 5 - 40 % by weight, based on the total binder.

8. Binders according to one of Claims 1 to 7, characterized in that they are reacted with a partly blocked polyisocyanate which possesses on average one free isocyanate group per molecule and whose blocked isocyanate groups are stable at room temperature.

9. Process for the preparation of binders for cationic electrocoating paints based on the reaction products of modified epoxy resins and primary, secondary and/or tertiary amines and ammonium salts or mixtures of sulfide/acid and phosphine/acid, which also contain, where appropriate, cross-linking agents, pigments, flow-out agents and other customary auxiliary agents, characterized in that

A) low-molecular epoxy resins containing aromatic groups, having an epoxide equivalent weight below 375, are reacted with

B) aliphatic and/or alicyclic polyfunctional alcohols and/or carboxylic acids of a molecular weight below 350 with addition to the epoxide groups to form an intermediate which still contains epoxide groups, in such a manner that the intermediate contains a proportion of 10 - 45 % by weight of aromatic groups, calculated as phenylene group, and this inlermediate is reacted with

C) an elastified polyphenol of a molecular weight greater than 350 which corresponds to the following general formula

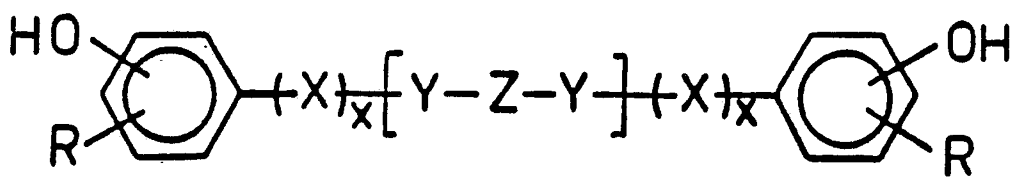

in which

X denoles alkylene, arylene, alkarylene, O, O-alkylene, O-arylene, O-alkarylene, S, S-alkylene, S-arylene, S-alkarylene, -CO-, CO-alkylene, CO-arylene, CO-alkarylene, $-SO_2-$, $SO_2$-alkylene, $SO_2$-arylene, $SO_2$-alkarylene, NH, NH-alkylene, NH-arylene, NH-alkarylene

x denotes 0 or 1

Y denotes X, 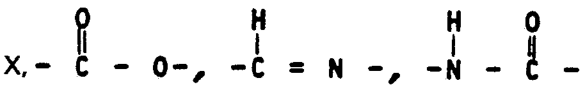

Z denotes alkylene, alkylene radicals based on polyesters, polyethers, polyamides, polycarbonates and polyurethanes

R denotes H, $CH_3$, alkyl-, $-O-CH_3$, -O-alkyl, $-NO_2$, $-NR'_2$, -NR'R'', -NHCOR'''

and is further modified by reaction with

D) primary and/or secondary amines and/or their salts to achieve the required water dispersibility.

10. Process according to Claim 9, characterized in that epoxy resins based on bisphenol A are used as the component A.

11. Process according to Claim 9, characterized in that polyglycidyl esters are used as epoxy resin.

12. Process according to one of Claims 9 to 11, characterized in that a diol or a dicarboxylic acid with a branched aliphatic chain is used as the component B.

13. Process according to one of Claims 9 to 12, characterized in that a diol or a dicarboxylic acid with at least one neostructure is used as the component B.

14. Process according to one of Claims 9 to 13, characterized in that the molecular weight of the component C is 530 - 3,000.

15. Process according to one of Claims 9 to 14, characterized in that the proportion of the component C is 5 - 40 % by weight, based on the total binder.

16. Process according to one of Claims 9 to 15, characterized in that the binder is reacted with a partly blocked polyisocyanate which possesses on average one free isocyanate group per molecule and whose blocked isocyanate groups are stable at room temperature.

17. Use of the binders according to one of Claims 1 to 8 for electro-coating baths.

18. Process for the electrophoretic coating of an electrically conducting substrate connected as cathode, from an aqueous bath, based on cationic binders at least partly neutralized with acids, in which the binders have become self-cross-linking by reaction or the bath contains an additional cross-linking agent, characterized in that the binders are reaction products of

A) low-molecular epoxy resins containing aromatic groups and having an epoxide equivalent weight below 375,

B) aliphatic and/or alicyclic polyfunctional alcohols and/or carboxylic acids of a molecular weight below 350,

C) elastified polyphenols of a molecular weight greater than 350 which correspond to the following general formula

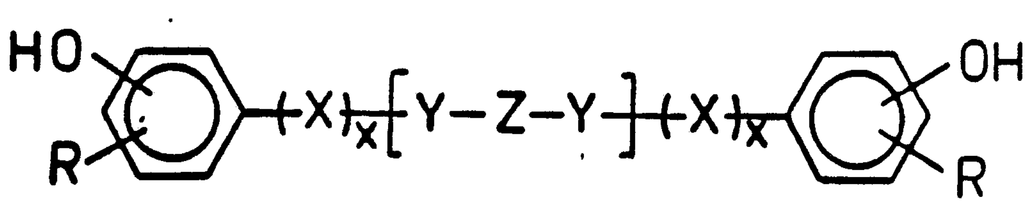

in which

X denotes alkylene, arylene, alkarylene, O, O-alkylene, O-arylene, O-alkarylene, S, S-alkylene, S-arylene, S-alkarylene, -CO-, CO-alkylene, CO-arylene, CO-alkarylene, $-SO_2-$, $SO_2$-alkylene, $SO_2$-arylene, $SO_2$-alkarylene, NH, NH-alkylene, NH-arylene, NH-alkarylene

x denotes 0 or 1

Y denotes X, 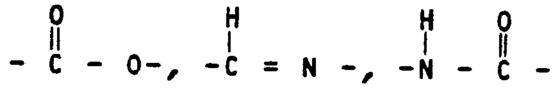

Z denotes alkylene, alkylene radicals based on polyesters, polyethers, polyamides, polycarbonates and polyurethanes

R denotes H, $CH_3$, alkyl, $-O-CH_3$, -O-alkyl, $-NO_2$, $-NR'_2$, -NR'R'', -NHCOR'''

D) primary and/or secondary amines and/or ammonium salts, the reaction product formed from A and B having a 10 - 45 % content of aromatic groups, calculated as phenylene group.

19. Process according to Claim 18, characterized in that the component A is an epoxy resin based on bisphenol A.

20. Process according to Claim 18, characterized in that the component A is a polyglycidyl ester.

21. Process according to one of Claims 18 to 20, characterized in that the component B is a diol or a dicarboxylic acid with a branched aliphatic chain.

22. Process according to one of Claims 18 to 21, characterized in that the component B is a diol or a dicarboxylic acid with at least one neostructure.

23. Process according to one of Claims 18 to 22, characterized in that the molecular weight of the component C is 530 - 3,000.

24. Process according to one of Claims 18 to 23, characterized in that the proportion of the component C is 5 to 40 % by weight, based on the total binder.

## Revendications

1. Liants dispersibles dans l'eau pour vernis d'éléctrodéposition cationiques, obtenus par réaction de:

A) résines époxydiques renfermant des groupes aromatiques, de faible masse moléculaire, présentant un poids équivalent en époxy inférieur à 375, avec

B) des alcools et/ou des acides carboxyliques polyfonctionnels aliphatiques et/ou alicycliques, présentant une masse moléculaire moyenne en nombre inférieure à 350, donnant un produit intermédiaire renfermant des groupes époxy, qui renferme une fraction en groupes aromatiques, calculés en tant que groupes phénylène, de 10 à 45 % en poids, et modification ultérieure du produit intermédiaire obtenu avec

C) un composé présentant au moins 2 groupes hydroxyle, avec addition sur les groupes époxy, et réaction ultérieure du produit de réaction de A), B) et C) avec

D) des amines primaires et/ou secondaires, ou des sels d'ammonium, en vue de l'obtention de la dispersibilité dans l'eau nécessaire, caractérisés par le fait que le composant C) est un polyphénol rendu élastique, présentant une masse moléculaire dépassant 350, qui correspond à la formule générale:

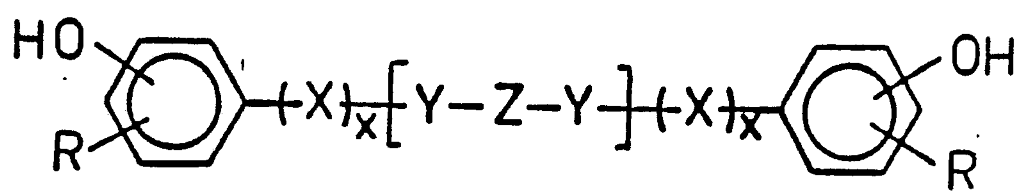

dans laquelle:

X = alkylène, arylène, alkarylène, O, O-alkylène, O-arylène, O-alkarylène, S, S-alkylène, S-arylène, S-alkarylène, $-SO_2$, $SO_2$-alkylène, $SO_2$-arylène, $SO_2$-alkarylène;

x = 0 ou 1;

Y = X, 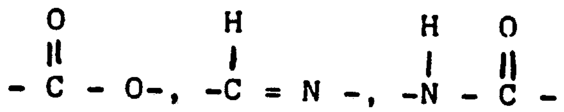

Z = alkylène, reste alkylène de polyesters, polyéthers, polyamides, polycarbonates, polyuréthannes,

R = H, $CH_3$, alkyle-, $-O-CH_3$, -O-alkyle, $-NO_2$, $-NR'_2$, -NR'R'', -NHCOR'''.

2. Liants selon la revendication 1, caractérisés par le fait que le composant A est une résine époxyde à base de bisphénol A.

3. Liants selon la revendication 1, caractérisés par le fait que le composant A est un polyglycidylester.

4. Liants selon l'une des revendications 1 à 3, caractérisés par le fait que le composant B est un diol au un acide dicarboxylique présentant une chaîne aliphatique ramifiés.

5. Liants selon l'une des revendications 1 à 4, caractérisés par le fait que le composant B est un diol ou un acide dicarboxylique présentant au moins une structure néo.

6. Liants selon l'une des revendications 1 à 5, caractérisés par le fait que la masse moléculaire du composant C s'élève à 530 - 3000.

7. Liants selon l'une des revendications 1 à 8, caractérisés par le fait que la fraction constituée par le composant C s'élève à 5 - 40 % en poids sur la base de la totalité du liant.

8. Liants selon l'une des revendications 1 à 7, caractérisés par le fait qu'ils ont réagi avec un polyisocyanate partiellement bloqué, qui possède, en moyenne, un groupe isocyanate libre par molécule et dont les groupes isocyanate bloqués sont stables à la température ambiante.

9. Procédé de fabrication de liants pour vernis d'électrodéposition cationiques, à base de produits de réaction de résines époxydiques modifiées et d'amines de même que de sels d'ammonium primaires, secondaires et/ou tertiaires, ou de mélanges sulfure/acide ou phosphine/acide, qui renferment, le cas échéant, des agénts de réticulation, des pigments, des agents favorisant l'écoulement et autres adjuvants usuels, caractérisé par le fait que l'on fait réagir:

A) des résines époxydiques renfermant des groupes aromatiques, de faible poids moléculaire, présentant un poids équivalent en époxy inférieur à 375, avec

B) des alcools et/ou des acides carboxyliques polyfonctionnels aliphatiques et/ou alicycliques, présentant une masse moléculaire inférieure à 350, avec addition sur les groupes époxy, donnant un produit intermédiaire renfermant encore des groupes époxy, de telle sorte que le produit intermédiaire renferme une fraction de groupes aromatiques, calculs en tant que groupes phénylène, de 10 - 45 %, et que l'on modifie encore ce produit intermédiaire avec

C) un polyphénol rendu élastique, présentant une masse moléculaire dépassant 350, qui correspond à la formule générale suivante:

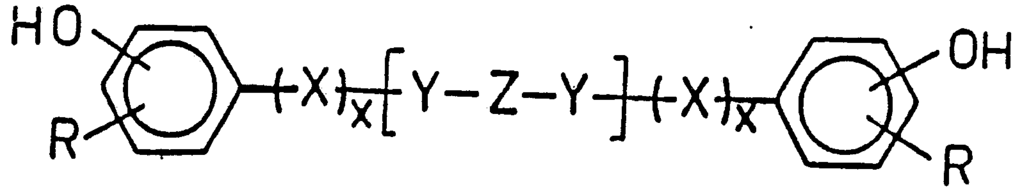

formule dans laquelle:

X = alkylène, arylène, alkarylène, O, O-alkylène, O-arylène, O-alkarylène, S, S-alkylène, S-arylène, S-alkarylène, -CO-, CO-alkylène, CO-arylène, CO-alkarylène, $-SO_2$-, $SO_2$-alkylène, $SO_2$-arylène, $SO_2$-alkarylène, NH, NH-alkylène, NH-arylène, NH-alkarylène;

x = 0 ou 1;

Y = X, 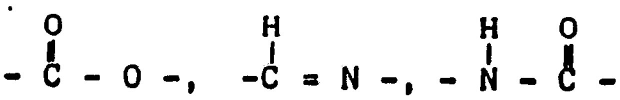

Z = alkylène, reste alkylène de polyesters, polyéthers, polyamides, polycarbonates, polyuréthannes,

R = H, $CH_3$, alkyle-, $-O-CH_3$, -O-alkyle, $-NO_2$, $-NR'_2$, -NR'R'', -NHCOR''',

de même que, pour obtenir la dispersibilité dans l'eau nécessaire, avec

D) des amines primaires et/ou secondaires et/ou leurs sels.

10. Procédé selon la revendication 9, caractérisé par le fait que l'on utilise, comme composant A, des résines époxydiques à base de bisphénol A.

11. Procédé selon la revendication 9, caractérisé par le fait que l'on utilise, comme résine époxydique, un polyglycidylester.

12. Procédé selon l'une des revendications 9 à 11, caractérisé par le fait que l'on utilise, comme composant B, un diol ou un acide dicarboxylique présentant une chaîne aliphatique ramifiée.

13. Procédé selon l' une des revendications 9 à 12, caractérisé par le fait que l'on utilise, comme composant B, un diol ou un acide dicarboxylique présentant au moins une structure néo.

14. Procédé selon l'une des revendications 9 à 13, caractérisé par le fait que la masse moléculaire du composant C s'élève à 530 - 3000.

15. Procédé selon l'une des revendications 9 à 14, caractérisé par le fait que la fraction constituée par le composant C s'élève à 5 - 40 % en poids sur la base de la totalité du liant.

16. Procédé selon l'une des revendications 9 à 15, caractérisé par le fait que l'on fait réagir le liant avec un polyisocyanate partiellement bloqué, qui possède, en moyenne, un groupe isocyanate libre par molécule et dont les groupes isocyanates bloqués sont stables à la température ambiante.

17. Utilisation des liants tels que définis à l'une des revendications 1 à 8, pour des bains d'électrodéposition.

18. Procédé pour le revêtement électrophorétique d'un substrat monte en cathode, électriquement conducteur, à partir d'un bain aqueux à base de liants cationiques au moins partiellement neutralisés par des acides, les liants ayant été rendus auto-réticulables par réaction ou bien le bain renfermant un agent de réticulation additionnel, caractérisé par le fait que les liants sont les produits de réaction de:

A) résines époxydiques renferment des groupes aromatiques, de faible masse moléculaire, présentant un poids équivalent en époxy inférieur à 375, avec

B) des alcools et/ou des acides carboliques polyfonctionnels aliphatiques et/ou alicycliques, présentant une masse moléculaire inférieure à 350,

C) des polyphénols rendus élastiques, présentant une masse moléculaire dépassant 350, qui correspondent à la formule générale:

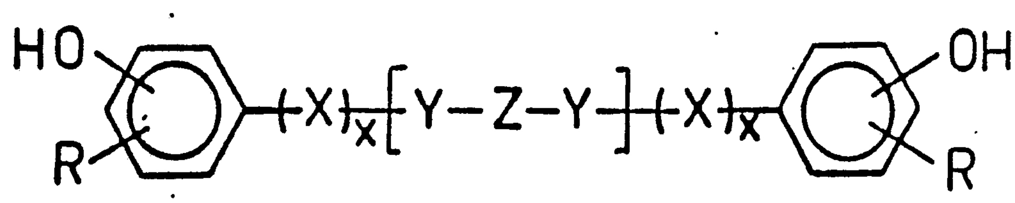

dans laquelle:

X = alkylène, arylène, alkarylène, O, O-alkylène, O-arylène, O-alkarylène, S, S-alkylène, S-arylène, S-alkarylène, -CO-, CO-alkylène, CO-arylène, CO-alkarylène, $-SO_2$, $SO_2$-alkylène, $SO_2$-arylène, $SO_2$-alkarylène, NH, NH-alkylène, NH-arylène, NH-alkarylène;

x = 0 ou 1,

Y = 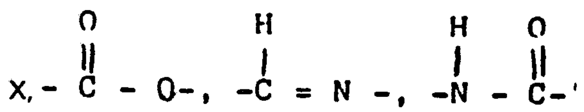

Z = alkylène, reste alkylène de polyesters, polyéthers, polyamides, polycarbonates, polyuréthannes,

R = H, $CH_3$, alkyle-, $-O-CH_3$, -O-alkyle, $-NO_2$, $-NR'_2$, -NR'R'', -NHCOR''',

D) des amines primaires et/ou secondaires et/ou des sels d'ammonium, le produit de réaction de A et B renfermant une fraction en groupes aromatiques, calculés en tant que groupes phénylène, de 10 - 45 %.

19. Procédé selon la revendication 18, caractérisé par le fait que le composant A est une résine époxyde à base de bisphénol A.

20. Procédé selon la revendication 18, caractérisé par le fait que le composant A est un polyglycidylester.

21. Procédé selon l'une des revendications 18 à 20, caractérisé par le fait que le composant 8 est un diol ou un acide dicarboxylique présentant une chaîne aliphatique ramfiée.

22. Procéde selon l'une des revendications 18 à 21, caractérisé par le fait que le composant 8 est un diol ou un acide dicarboxylique présentant au moins une structure néo.

23. Procédé selon l'une des revendications 18 à 22, caractérisé par le fait que la masse moléculaire du composant C s'élève à 530 - 3000.

24. Procédé selon l'une des revendications 18 à 23, caractérisé par le fait que la fraction constituée par le composant C s'élève à 5 à 40 % en poids sur la base de la totalité du liant.